(19) Europäisches Patentamt
European Patent Office
Office européen des brevets

(11) **EP 4 300 807 A1**

(12) **EUROPEAN PATENT APPLICATION**

(43) Date of publication:
**03.01.2024 Bulletin 2024/01**

(21) Application number: **22386043.8**

(22) Date of filing: **01.07.2022**

(51) International Patent Classification (IPC):
*H02P 6/182* (2016.01)

(52) Cooperative Patent Classification (CPC):
**H02P 6/182**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hamilton Sundstrand Corporation Charlotte, NC 28217 (US)**

(72) Inventor: **ROADLEY-BATTIN, Jonathan Mark Birmingham B31 2BZ (GB)**

(74) Representative: **Dehns St. Bride's House 10 Salisbury Square London EC4Y 8JD (GB)**

(54) **PERMANENT MAGNET MOTOR CONTROL**

(57) A method of operating an electric motor system that comprises a motor that comprises a rotor having a magnet mounted thereto and a stator that comprises one or more motor phase windings for driving rotation of the rotor when the motor phase windings receive an input voltage from an electrical power supply, the motor further comprising a controller that executes a back "EMF" observer that is operable to estimate a rotor angle by observing a back electromotive force induced in the stator by the rotor. Filtering is applied to the back EMF signal to reduce harmonics prior to determining the rotor angle.

Fig. 5B

**Description**

**TECHNICAL FIELD**

The present invention relates generally to the operation of electric motors, and in particular to "sensorless" control of electric motors of the type comprising a stator and a rotor having a magnet mounted thereto (so-called "permanent magnet" motors).

**BACKGROUND**

In the aerospace industry, there is currently a trend towards so-called More Electric Aircraft (MEA) whereby loads, such as flight control surfaces, landing gear, actuators, fans, pumps, etc., which have traditionally been controlled by hydraulic and mechanical systems are now being designed to be controlled electrically by means of an electric motor. For example, newer generations of high lift systems are envisaged to be highly flexible, distributed and actively controlled using Electro Mechanical Actuators (EMAs) that are driven by an electric motor drive system.

Typical motor drive systems consist of a single motor driven by an inverter. To reduce weight and size, so-called "permanent magnet" motors are often used since they typically have a higher torque/power density ratio in comparison to other motor alternatives such as switched reluctance or induction motors. In a permanent magnet motor, the motor comprises a stator and a rotor having a magnet mounted thereto. An electric drive circuit is provided that comprises a plurality of phases or windings for driving rotation of the rotor when, in a drive mode, the phases or windings receive a current from an electrical power supply.

In order to provide accurate motor control, it is desirable to know the position of the rotor (the rotor angle) during motor operation, as well as the rotor speed. For example, once the rotor angle and speed is known, this can then be used appropriately, e.g., for speed control, to provide a smoother, more precise motor operation at the desired motor speed.

Traditionally, the rotor angle and speed has been determined using dedicated sensors installed within the motor. For example, a resolver may be used to determine the rotor angle and notify this to the controller accordingly. These sensors can be very efficient and are therefore normally used when higher precisions are desired. However, these sensors, and their connections, add extra weight and bulk to the system that may be undesirable, especially for aircraft applications.

Thus, another possibility is to provide a "sensorless" control where the rotor angle is instead determined using current and voltage information from the motor, which information can then be processed to determine the rotor position (angle) and speed. Various examples of "sensorless" motor control schemes are known.

One example of a known "sensorless" motor control scheme involves monitoring an induced voltage in the stator that opposes the change in magnetic flux caused by the spinning rotor (i.e. the counter or 'back' electromotive force (back EMF)). To achieve this, a back EMF observer may thus be provided, e.g. within a controller for the motor, which back EMF observer is operable to measure the back EMF induced in the stator to determine the rotor position (angle) and speed. This type of sensorless motor control using a back EMF observer can generally work well to provide good motor control but with current solutions is typically less precise than using embedded sensors to directly monitor the rotor position and speed.

The Applicants therefore believe there remains scope for improved motor control techniques.

**SUMMARY**

A first aspect of the technology described herein comprises a controller for an electric motor system comprising a motor that comprises a rotor having a magnet mounted thereto and a stator that comprises one or more motor phase windings for driving rotation of the rotor when the motor phase windings receive an input voltage from an electrical power supply, wherein the controller executes a back "EMF" observer that is operable to estimate a rotor angle by observing a back electromotive force induced in the stator by the rotor, the controller comprising:

a first processing stage that is configured to obtain as input a first set of one or more measured values indicative of a current and/or voltage measured for the respective motor phase windings of the stator and a corresponding second set of one or more supplied values indicative of the input voltage supplied to the motor phase windings from the electrical power supply, and to use the measured and supplied values obtained as input to generate one or more back EMF signals indicative of the back EMF induced in the respective motor phase windings by the rotor;

a filtering stage for filtering the one or more back EMF signals generated by the first processing stage, wherein the one or more back EMF signals vary as a periodic function of the rotor angle, the periodic function including a fundamental component representing the variation at a fundamental frequency associated with the rotor angle and a corresponding set of harmonic components representing the variation at respective harmonics of the fundamental frequency associated with the rotor angle, and wherein the filtering stage is configured to reduce one or more harmonic components from the back EMF signals; and

a second processing stage configured to receive the filtered back EMF signals from the filtering stage and to determine, using a known relationship between the back EMF and the rotor angle, information indicative of the rotor angle.

A second aspect of the technology described herein comprises a method of operating an electric motor system that comprises a motor that comprises a rotor having a magnet mounted thereto and a stator that comprises one or more motor phase windings for driving rotation of the rotor when the motor phase windings receive an input voltage from an electrical power supply, the motor further comprising a controller that executes a back "EMF" observer that is operable to estimate a rotor angle by observing a back electromotive force induced in the stator by the rotor,

the method comprising, the controller:

obtaining as input a first set of one or more measured values indicative of a current and/or voltage measured for the respective motor phase windings of the stator and a corresponding second set of one or more supplied values indicative of the input voltage supplied to the motor phase windings from the electrical power supply;

using the measured and supplied values obtained as input to generate one or more back EMF signals indicative of the back EMF induced in the respective motor phase windings by the rotor, , wherein the one or more back EMF signals vary as a periodic function of the rotor angle, the periodic function including a fundamental component representing the variation at a fundamental frequency associated with the rotor angle and a corresponding set of harmonic components representing the variation at respective harmonics of the fundamental frequency associated with the rotor angle;

filtering the one or more back EMF signals to reduce one or more harmonic components from the back EMF signals; and

determining from the filtered back EMF signals, using a known relationship between the back EMF and the rotor angle, information indicative of the rotor angle.

**BRIEF DECRIPTION OF THE DRAWINGS**

Figure 1 shows a schematic of a part of a motor according to an embodiment;

Figure 2 shows a schematic of a part of a motor drive system for use with a motor of the type shown in Figure 1;

Figure 3A shows a diagram of a part of a conventional controller configured to implement a conventional back EMF observer algorithm;

Figure 3B shows a schematic of a part of a conventional controller configured to implement a conventional back EMF observer algorithm;

Figures 4A and 4B show per-unit back EMF voltage components using a conventional back EMF observer algorithm for two different motors;

Figure 5A shows a diagram of a part of a controller configured to implement a back EMF observer algorithm, according to an embodiment of the present invention;

Figure 5B shows a schematic of a part of a controller configured to implement a back EMF observer algorithm, according to an embodiment of the present invention; and

Figure 6 shows the rotor angle for a positional saw tooth mode of operation when measured using an embodiment of the present invention compared with a reference angle measured using an additional resolver.

Like reference numerals are used for like components where appropriate in the Figures.

**DESCRIPTION**

The technology described herein generally relates to electric motors, and in particular to so-called "permanent magnet" electric motors. In permanent magnet systems, as mentioned above, a magnet is mounted to the rotor to create a permanent magnetic field. The motor is driven using a variable frequency drive, e.g. through a stator comprising one or more induction coils or windings (corresponding to respective 'motor phases') positioned circumferentially around the rotor.

In order to control the motor speed, the rotor position and/or speed is typically used as feedback to the variable frequency drive. Thus, the controller is configured to receive as input the rotor position and/or speed and to control the motor accordingly, e.g. by adjusting the input to the motor phases to control the motor speed. The technology described herein relates particularly to determining the rotor angle that is used for such control. Thus, in embodiments, once the information indicative of the rotor angle is determined, this is then provided as position feedback and used by the controller to control the operation of the motor, e.g. in the normal way.

Traditionally, the rotor position feedback has been provided by incorporating a position sensor such as a resolver into the electric motor. In that case, the controller typically calculates the rotor speed feedback based on the rotor position determined by the resolver and controls the inputs to the motor phases accordingly. This sensor-based approach can be very effective at providing an accurate motor control and is therefore especially used for higher precision applications. However, the sensors add bulk and weight to the motor which may be less desirable for some applications such as in aerospace where space is at a premium and it is desired to reduce bulk and weight as much as possible. Further this can also increase maintenance requirements and costs since there are further components (i.e. the sensors) that may fail.

In permanent magnet motor systems there is accordingly a trend towards "sensorless" systems where the rotor position (angle) and speed is not directly measured, but is instead calculated or estimated based on other parameters. This then allows the rotor position and speed to be determined without providing dedicated sensors, which can therefore provide a more lightweight and cost-effective system.

One known approach to sensorless control involves monitoring an induced voltage in the stator motor phase windings that opposes the driving force (i.e. monitoring the back electromotive force, "EMF") and inferring the rotor position and speed from the back EMF. For instance, the back EMF will generally vary as a function of the rotor angle and speed in a predetermined manner and so it is possible to define a relationship between the back EMF and the rotor angle and speed which therefore allows the rotor angle and speed to be determined from the measured back EMF.

The technology described herein particularly relates to such control schemes that rely on monitoring the back EMF induced in the stator and using the back EMF to determine the rotor position (angle) and speed. In particular, the technology described herein relates to an improved, e.g. higher precision, implementation of such sensorless control using a back EMF observer.

Thus, according to the technology described herein, the controller comprises a first processing stage that effectively takes as input parameters the currents and/or voltages measured in the motor phase windings and the input voltage supplied to the motor phase windings and processes this information together to determine the back EMF of the motor.

In particular, the current and/or voltage measured in the motor phase windings will contain contributions from the back EMF. The back EMF may therefore be estimated based on the motor's equivalent circuit, as will be explained further below. The processing may therefore, and in an embodiment does, also take into account the motor's characteristics such as the resistance and inductance of the motor when determining the back EMF signal, . The back EMF of the motor estimated by the observer is a function of the rotor angle. In particular, the observed back EMF will typically, and in embodiments does, vary as a periodic function of the rotor angle.

The first signal can then be (and is) effectively processed, by a second processing stage, that is configured to process the back EMF signal to convert the back EMF signal into information indicative of a rotor angle using a known relationship between the back EMF and the rotor angle.

For example, in an idealised permanent magnet synchronous motor, the back EMF associated with one of the motor phase windings, be proportional to $\sin \theta$, where $\theta$ is the rotor angle. In a three phase motor, the other two phases may then be displaced by $\pm 2\pi/3$. The three phase signals in that case can be expressed in a stationary, alpha and beta reference frame, e.g. via a Clarke transform. That is, in embodiments, the first processing stage determines two back EMF signals representing the observed back EMF in the stationary, alpha and beta reference frame. These two signals can then be processed accordingly to determine $\theta$, effectively by dividing the signals and computing the arctan of the result to solve for $\theta$, as will be explained further below.

Other arrangements would be possible depending on the number of phases or windings, etc., and how the signal(s) generated in the first processing circuit relate to the motor phases or windings.

The approach described above then allows for a 'closed loop' control, which can provide effective motor control, e.g. to ensure the rotor (magnet) speed is optimally controlled based on the position of the rotor with respect to the motor phase currents for the desired motor operation.

The Applicants recognise that one limitation of such sensorless operation is that the variation of the back EMF with the rotor angle will not follow the idealised relationship but will naturally contain noise particularly in the form of harmonics of the fundamental frequency variation. These harmonics will generally depend on the motor design. The presence of these harmonics introduces a high frequency fluctuation to the estimated rotor angle that in turn may result in torque ripple. For this reason, such solutions are often not used for higher precision motor control.

For example, as mentioned above, the first signal indicative of the back EMF will generally vary as a periodic function of the rotor angle, $\theta$. In an idealised situation, the back EMF may vary only in terms of $\sin \theta$ (or, generally, $\sin (\theta + k\pi)$, where $k\pi$ reflects a phase shift, and $k$ may be fractional). However, in general, due to variations in the motor's characteristics, the actual variation will be more complex and can therefore be described as a Fourier series including a potentially infinite number of harmonic terms of the form sin ($N\theta$), where N is an integer greater than one, in addition to the variation at the fundamental frequency (i.e. the sin $\theta$ term). When the signal including such harmonics is processed assuming an idealised relationship, there will therefore be an error in the determined rotor position that is introduced due to the presence of such harmonics. This error in turn feeds back into the motor control and can result in a less smooth motor operation.

To address this, the Applicants propose to introduce a filtering stage that acts to substantially reduce or remove such harmonics and therefore produce a more idealised (i.e. sinusoidal) back EMF estimation, and in turn a smoother rotor angle estimation. In particular, filtering is applied to the output of the first processing stage (the back EMF estimation), before the back EMF is processed to determine the rotor angle in the second processing stage.

In this respect, the Applicants recognise that an improved, e.g. smoother, motor control can be achieved by applying filtering directly to the estimated back EMF signal determined by the first signal processing stage, before the back EMF signal is processed to determine the rotor angle (e.g. before the arctan is calculated) in the second signal processing stage. By applying filtering at this point, this improves the accuracy of the rotor angle estimation with minimal side effects, i.e. without introducing significant latency to the rotor angle calculation. This also facilitates relatively simpler filtering circuitry since it is only necessary to filter out some of the harmonics, e.g. using suitable band pass or band stop filtering circuitry. The improved motor control can therefore be achieved with relatively low complexity, e.g. compared to trying to filter the determined rotor angle and speed, e.g. at the output of the second processing stage (e.g. by filtering the result of arctan calculation).

Thus, in embodiments, the filtering stage comprises a band pass or band stop filter that is configured to pass components of the first signal within a certain range of frequencies including the fundamental frequency associated with the rotor angle but to reject frequencies in one or more frequency ranges associated with one or more harmonics of the fundamental frequency associated with the rotor angle.

In some embodiments, the filtering stage has a variable filtering characteristic. In that case, the filtering characteristic of the filtering stage may be adjusted in use based on feedback of the rotor angle and/or rotor speed. In other embodiments, the filtering characteristics of the filtering stage may be pre-set based on a prior characterisation of the motor. Various arrangements would be possible in that regard.

The technology described herein may therefore provide various benefits compared to other approaches.

Subject to the requirements of the technology described herein the back EMF observer may be implemented in any suitable manner as desired. In general the back EMF observer comprises first and second main processing stages, as will be explained further below. However, various other processing stages or steps may be performed as desired. Further, although the processing stages are described as separate stages it will be appreciated that these may share at least some circuitry or processing operations. Various arrangements would be possible in that regard depending on the implementation,

The first main processing stage of the back EMF observer thus in an embodiment takes as input parameters the motor phase currents as measured at the terminals of the motor phase windings and the voltages supplied to the motor phase windings by the electrical power supply. Optionally, or alternatively, the voltages measured at the terminals of the motor phase windings may also be provided as input. In some embodiments, respective values are obtained for each motor phase. Thus, for a three phase motor, for example, the first main processing stage may take as input a corresponding three measured currents and there supplied voltages. In embodiments however, the currents and voltages may be first transformed into a different representation to simplify the processing. For instance, in embodiments, for a three phase motor, the currents and voltages are transformed into a two-phase alpha beta stationary reference for calculation simplicity purposes. Thus, in embodiments, there are two signals that are processed in the first main processing stage and correspondingly two back EMF signals are generated, representing the back EMF induced in the stator windings in the two-phase alpha beta stationary reference frame. Various other arrangements would of course be possible.

The second main processing stage of the back EMF observer effectively processes the back EMF signals generated by the first main processing stage to determine the rotor angle. This basically involves performing a sequence of computations to solve a set of equations based on the predetermined (known) relationship between the back EMF and the rotor angle. For example, where the first signal processing circuit outputs two (first) signals, as mentioned above, this will typically lead to a pair of simultaneous equations that can be solved for rotor position and rotor speed, as will be explained further below. As mentioned above, this typically involves computing an arctan function which can be done in any suitable manner as desired. However, various other arrangements would be possible.

Thus, in embodiments, the motor is a three-phase motor, and a transformation is applied to convert the measured currents and applied inputs for the three motor phases into a stationary two-phase representation such that a corresponding two signals indicative of the back EMF are generated by the first processing circuit, and wherein, after the two signals have been filtered to reduce harmonics, the second processing circuit processes the two filtered signals together to convert the two filtered signals into information indicative of the rotor angle.

Thus, in embodiments, the output of the second main processing stage is information indicative of both the rotor position and rotor speed. In some embodiments however the second processing stage could just output the rotor position and further processing could be performed to determine the rotor speed from the variation of the rotor position over time. This information is then provided as feedback and used by the controller to control the motor operation accordingly. For example, based on the position and/or speed feedback the voltages supplied to the motor phase windings may be adjusted. A closed loop control may thus be realised.

As mentioned above, this type of closed loop control can work well, e.g. to provide an accurate motor control, when the rotor is spinning and without additional perturbations. That is, the ideal system should produce a back EMF which varies as an essentially sinusoidal function of the rotor angle,, which, when excited with a corresponding sinusoidal current, can produce optimal torque. However, in practice, the specific motor topology and design as well as external disturbances, may result in unwanted perturbations or harmonics contributing to the otherwise-sinusoidal back EMF. These unwanted perturbations or harmonics in the back EMF may then result in errors in the rotor position and/or speed determined by the second signal processing circuit based on the back EMF.

The technology described herein recognises that the presence of these harmonics may therefore result in sub-optimal motor control.

To address this, the technology described herein provides filtering between the first and second processing stages such that the filtering is applied to the back EMF signal. By cleaning the back EMF signals in this way prior to determining or estimating the rotor angle, e.g. rather than compensating for unwanted perturbations or harmonics downstream of the second processing stage i.e. after the rotor angle is estimated, a more accurate determination of rotor position and/or speed can be made without requiring additional complexity or latency due to the filtering, resulting in an overall improved motor control.

The electric motor may be any suitable electric motor comprising a permanent magnet. In embodiments, the electric motor is a three phase motor. Subject to the particular requirements of the technology described herein, however, the electric motor may otherwise be constructed and operated in any suitable manner, as desired.

The back EMF may be implemented by the controller in any suitable manner, as desired. For instance, this may typically involve the controller executing an appropriate observer algorithm that determines the back EMF. This algorithm may be executed by any suitable processing element of the controller. For example, this may be implemented in hardware or software (including embedded software), as desired, using any suitable processor or processors, controller or controllers, functional units, circuitry, processing logic, microprocessor arrangements, etc., that are operable to perform the various functions, etc., such as appropriately dedicated hardware elements (processing circuitry) and/or programmable hardware elements (processing circuitry) that can be programmed to operate in the desired manner.

The methods in accordance with the technology described herein may be implemented at least partially using software e.g. embedded software. The controller may thus comprise a suitable microprocessor or microcontroller that is configured to execute software to perform the various operations described herein.

It will thus be seen that when viewed from further embodiments the technology described herein provides software specifically adapted to carry out the methods herein described when installed on a suitable data processor, a computer program element comprising software code portions for performing the methods herein described when the program element is run on a data processor, and a computer program comprising code adapted to perform all the steps of a method or of the methods herein described when the program is run on a data processing system.

Other arrangements would however be possible. For instance, the methods may also be implemented at least partially using appropriately dedicated hardware elements (processing circuitry) and/or programmable hardware elements (processing circuitry, e.g. such as a programmable FPGA (Field Programmable Gate Array)) that form part of the motor controller and can be programmed to operate in the desired manner.

The electric motor and methods of operating an electric motor described herein may find utility in any suitable system where motor loads are desired. In some embodiments the electric motor is provided on-board an aircraft, e.g., for providing aircraft motor loads, e.g. for controlling flight control surfaces, landing gear, actuators, fans, pumps, and the like. Various other examples would be possible.

Embodiments will now be described, by way of example only, with reference to the accompanying drawings.

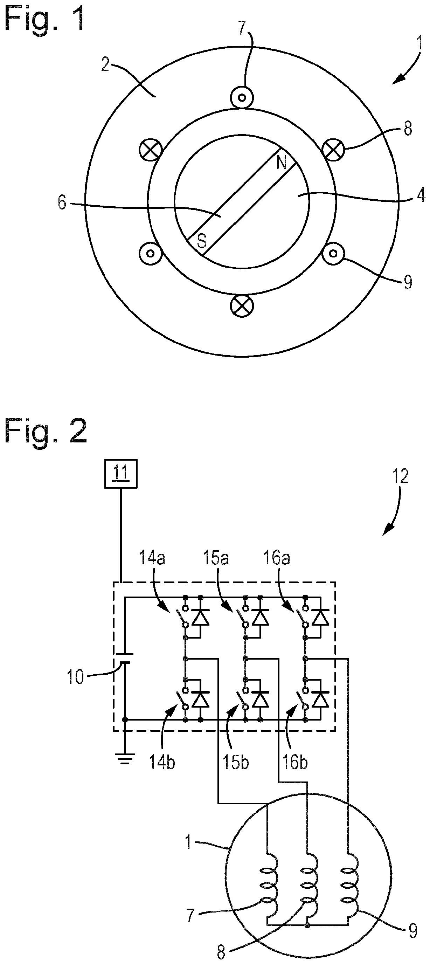

Figure 1 shows a schematic of a part of a motor 1 according to an embodiment of the technology described herein. The motor is a three-phase motor comprising a stator 2, a rotor 4, a permanent magnet 6 mounted on the rotor 4, and three motor phases 7,8,9 (hereinafter referred to as windings) for driving rotation of a rotor. However, embodiments are contemplated in which the motor is a multi-phase motor other than a three-phase motor, and/or which comprise a number of windings other than three.

Figure 2 shows a schematic of a part of a motor drive system for use with the motor of Figure 1. In this embodiment, the motor drive system includes a DC power supply 10 having a positive terminal and a relatively negative terminal (e.g. a ground terminal), three motor phases or windings 7,8,9 for driving rotation of the rotor 4 (shown in Figure 1), and a motor drive unit 12 comprising an inverter for selectively electrically connecting the motor phases or windings 7-9 to the positive and negative terminals of the power supply 10.

In the depicted embodiment the three phases or windings 7-9 are electrically connected to each other by a first end of each of the windings being connected at a common point. The second end of each of the windings is connected to the motor drive unit 12.

However, other configurations are contemplated herein. For example, the motor 1 may comprise only two phases or windings or more than three phases or windings. Alternatively, or additionally, the phases or windings 7-9 may not be connected at a common point. It is also contemplated that an AC power supply may be provided that is converted to provide said DC power supply 10.

The inverter in the motor drive unit 12 comprises a plurality of switches 14-16 that are closed and opened so as to connect and disconnect the second end of each phase or winding 7-9 to and from the positive and negative terminals of the power supply 10. More specifically, the second end of each phase or winding 7,8,9 is electrically connected to the positive terminal of the power supply 10 via its own switch 14a,15a,16a, such that when the switch is closed the second end of that phase or winding is connected to the positive terminal and when the switch is opened the second end of that phase or winding is disconnected from the positive terminal. The second end of each phase or winding is also electrically connected to the negative terminal of the power supply 10 via its own switch 14b,15b,16b, such that when the switch is closed the second end of that phase or winding is connected to the negative terminal and when the switch is opened the second end of the phase or winding is disconnected from the negative terminal.

In Figure 2, there is also illustrated a controller 11 for the motor. This controller 11 may for example, and typically is, included in the same box as the inverter in the motor drive unit 12. For instance, the controller 11 is in embodiments configured to control the switching patterns of the switches 14-16 for the inverter to control the motor operation. The controller 11 is further configured to implement a back EMF observer that is operable to monitor a back electromotive force ("EMF") induced in the stator during motor operation. This may be done in any suitable manner, as desired. For instance, this may typically involve the controller executing an appropriate observer algorithm that determines the back EMF. This algorithm may be executed by any suitable processing element of the controller. For example, this algorithm may be implemented in hardware or software (including embedded software), as desired, using any suitable processor or processors, controller or controllers, functional units, circuitry, processing logic, microprocessor arrangements, etc., that are operable to perform the various functions, etc., such as appropriately dedicated hardware elements (processing circuitry) and/or programmable hardware elements (processing circuitry) that can be programmed to operate in the desired manner.

The controller is also configured to determine a rotor angle from the observed back EMF and use the determined rotor angle when controlling the motor (in a closed loop mode). For example, the controller 11 may comprise a microprocessor that executes embedded software in order to control the motor operation and, as part of this overall control operation, the control algorithm may take as input the rotor position and speed as determined from the observed back EMF. For example, the rotor position (angle) is significant for certain motors, including permanent magnet synchronous motors, where the phase voltages, currents and the stator's magnetic field need to be oriented and synchronized to the rotor's magnetic field in order to produce torque.

In the present embodiments, a "sensorless" approach is applied to determine the rotor speed and position without requiring dedicated resolvers or position encoder devices for directly measuring the rotor position and speed. Various types of sensorless methods exist. Sensorless methods can be broadly classified to model-based, saliency based and open loop methods. In the present embodiments, however, a model based method is used that involves observing a back EMF induced in the stator windings 7-9 and inferring the rotor position and speed from the observed back EMF, to provide a closed loop control. A back EMF observer relies on electrical characteristics which are observable only when the motor is spinning. Thus, in embodiments, the motor may initially be operated in, e.g., an open loop manner, until the motor is operating at sufficient speed for the back EMF observer to function, at which point a transition to the closed loop control may be performed.

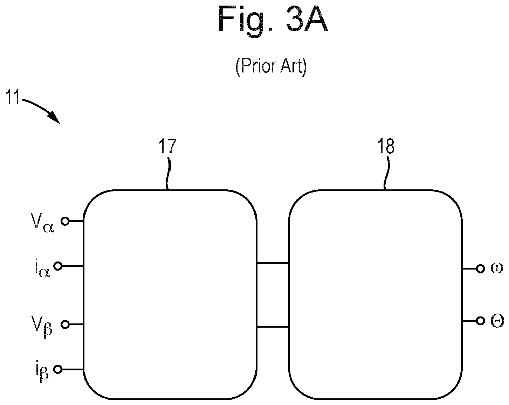

Figure 3A shows a schematic of a more conventional controller including circuitry 11 configured to implement a conventional back EMF observer algorithm that is operable to monitor a back EMF induced in the stator during motor operation, and accordingly calculate the motor position and speed based on measured currents and the motor phase voltages. As shown in Figure 3A, the circuitry 11 comprises a first signal processing circuit in the form of back EMF observer circuitry 17 and a second signal processing circuit in the form of tracker circuitry 18.

The back EMF observer circuitry 17 thus determines the back EMF generated by the spinning rotor, e.g. as described above via inference of switching activity, and/or by other passive measurements of terminal potentials and currents. The tracker circuitry 18 then takes the back EMF measured by the back EMF circuitry 17 and outputs rotor angle and speed estimations, as discussed in detail below.

In the present example there are three motor phases resulting from the three terminals in Figures 1 and 2 (which physically yields three separate measurements of currents and phase voltages). However, to simplify the calculations, in the present embodiments the three phases are transformed into a two-phase representation space, in $\alpha$ and $\beta$, using a suitable transformation, such as, e.g., a Clarke transformation, or in circuitry using a Scott-T transformer connection. This transformation is performed upstream of the back EMF observer 17.

For example, the three motor phases, A, B, C may be transformed, using the Clarke transformation, into a two-phase stationary frame, $\alpha$ and $\beta$, as follows:

$$\alpha = \text{A}; \ \beta = \frac{\text{B} - \text{C}}{\sqrt{3}}$$

As will be understood, a transformation of the three-phase signal to a two-phase signal helps simplify the analysis of the three-phase signal. However, the below analysis may be applied generally to the initial three-phase or multi-phase signal, using corresponding relationships derived for that situation. Likewise, any other suitable transformations may be used, as desired, to perform such calculations.

The back EMF observer 17 may thus output back EMF voltage components in the transformed two-phase space, $e_\alpha$ and $e_\beta$, as a function of rotor speed $\omega$ and rotor angle $\theta$, based on the input measured phase currents, $i_\alpha$ and $i_\beta$, and the applied motor phase voltages, $V_\alpha$ and $V_\beta$, again all transformed into the two-phase, $\alpha$ and $\beta$, representation. For example, the measured phase currents and applied motor phase voltages will generally be related according to Equation 1 below:

$$\begin{pmatrix} V_\alpha \\ V_\beta \end{pmatrix} = R_S * \begin{pmatrix} i_\alpha \\ i_\beta \end{pmatrix} + L_S * \frac{d}{dt}\begin{pmatrix} i_\alpha \\ i_\beta \end{pmatrix} + k_E \omega \begin{pmatrix} -\sin\theta \\ \cos\theta \end{pmatrix}; \qquad \text{Equation 1}$$

where $R_s$ and $L_s$ are the stator winding's resistance and inductance, respectively, and $k_E$ is the back EMF constant. To simplify the analysis Equation 1 assumes that each of the windings have the same resistances and the same inductances. However, as will be understood, this analysis can be readily extended to unequal resistances and unequal inductances.

Using the measured phase currents, $i_\alpha$ and $i_\beta$ and the applied motor phase voltages, $V_\alpha$ and $V_\beta$ it is thus possible from Equation 1 to extract the contribution from the back EMF induced in the stator, according to Equation 2 below:

$$\begin{pmatrix} e_\alpha \\ e_\beta \end{pmatrix} = k_E \omega \begin{pmatrix} -\sin\theta \\ \cos\theta \end{pmatrix}; \qquad \text{Equation 2}$$

Equation 2 thus represents a pair of simultaneous equations relating the back EMF determined in the two-phase stationary frame, $\alpha$ and $\beta$ to the unknown rotor speed $\omega$ and rotor angle $\theta$. The back EMF signals, $e_\alpha$ and $e_\beta$, are thus provided as output by the back EMF observer circuitry 17 which essentially solves these equations for the rotor speed $\omega$ and rotor angle $\theta$. The tracker circuitry 18 may then take, as an input signal thereto, the output signal $e_\alpha$ and $e_\beta$ from the back EMF observer circuitry 17, and is configured to perform suitable signal calculations to extract the rotor speed $\omega$ and rotor angle $\theta$ based on the known relationship between the back EMF signals and the rotor speed and angle set out in Equation 2, where, for $\omega > 0$, $\theta = \arctan(-e_\alpha, e_\beta)$, and for $\omega < 0$, $\theta = \arctan(-e_\alpha, e_\beta) + \pi$. That is, the tracker circuitry 18 may take the substantially sinusoidal signals $e_\alpha$ and $e_\beta$ and perform suitable calculations in hardware that solve Equation 2 to extract values for $\omega$ and $\theta$ which can then be provided back to the overall motor controller as desired.

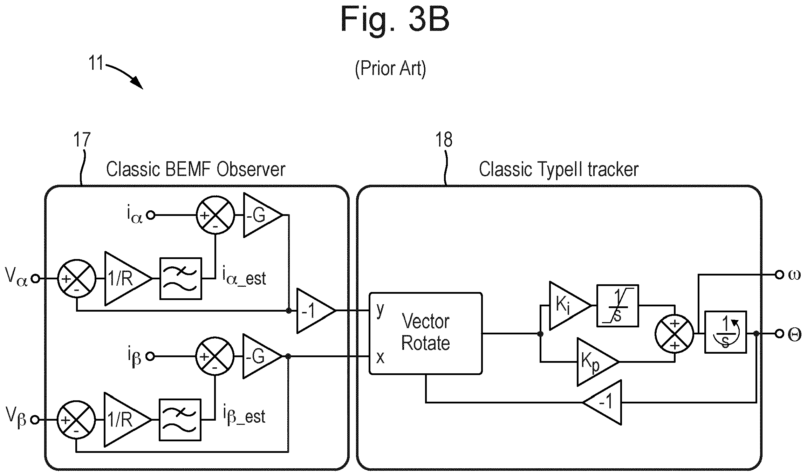

It is noted here that Figure 3B shows a specific example of back EMF observer circuitry 17 and a so-called 'Type-II' tracker circuitry 18. However, it will be appreciated that other suitable circuitry from implementing the back EMF sensorless control may also be used. For example, rather than a 'Type-II' tracker as illustrated in Figure 3B, the tracker circuitry may comprise a phase lock loop or similar.

It will be appreciated from the above that in idealised conditions the back EMF induced in the stator windings of a permanent magnet motor like that shown in Figure 1 will in theory present a sinusoidal back EMF profile, such that optimal torque may be produced when the motor is excited with a sinusoidal current. However, the Applicants have recognised that, in practice, there may be some harmonic content present in the back EMF signal, which may be naturally produced by a motor while spinning which arise, for example, due to variations in the motor topology and design.

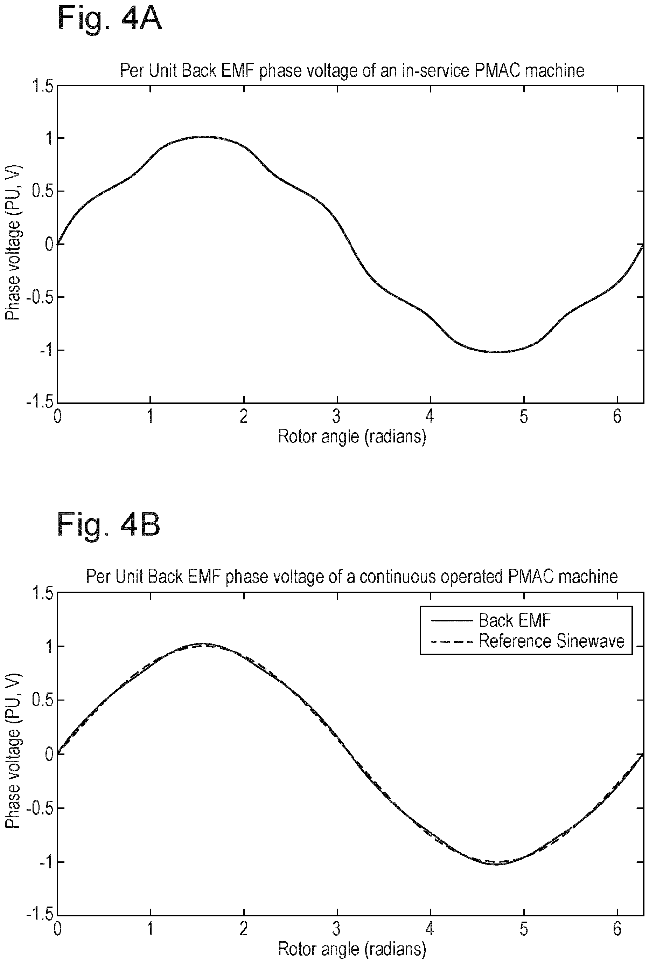

For instance, a given motor will be designed for use in certain applications, which will necessitate certain design choices, e.g. in terms of the size and arrangement of the motor, that may introduce variations in the motor characteristics such that the actual induced back EMF is no longer entirely or ideally sinusoidal. Figures 4A-4B show per-unit back EMF voltage components e as a function of rotor angle $\theta$ for two different example motors with different designs. In particular, Figure 4A shows the observed back EMF for a motor which was designed for a high peak power and short duty. On the other hand, Figure 4B shows the observed back EMF for a motor that was designed more continuous operation.

As can be seen, both examples deviate from the idealised sinusoidal behaviour, in particular exhibiting significant 5th and 7th harmonic content. For instance, in Figure 4A, the 5th and 7th harmonics are on the order of 10%. The harmonic content in Figure 4B is lower, at around 2-3% 5th harmonic, but this is still sufficient to see perturbations in the motor operation. In this respect, the present Applicants have realised that, when a back EMF observer is used to implement a sensorless position algorithm, this harmonic content appears in the rotor position and velocity calculations and thus significantly influences both the velocity control, as well as the torque production, of the motor. For this reason, sensorless approaches are often dismissed where higher precision motor control is desired, or heavy filtering is applied to the final output, to try to improve the control. However, applying filtering at the output may be more complex to implement and may still result in a less than ideal behaviour.

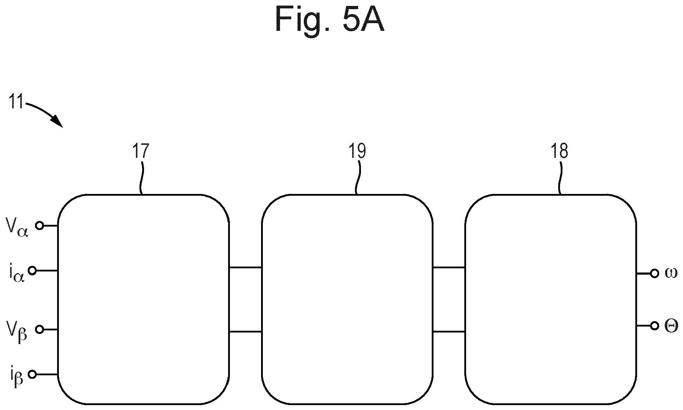

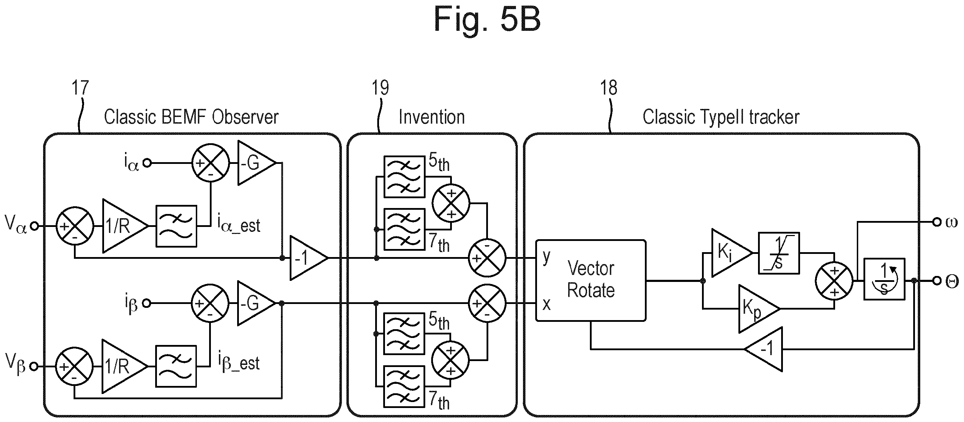

Accordingly, the present Applicants therefore propose an improved method for providing more precise motor control in particular by reducing or removing the effects of the above described harmonics (and indeed, any unwanted harmonic) at an earlier stage, in particular by providing appropriate filtering directly the observed back EMF signal, before the signal is provided to the tracker circuit 18, as shown in Figures 5A and 5B. In this way, it is possible to suppress the back EMF harmonics that are naturally produced by a motor while it is spinning.

According to the present embodiment, the back EMF observer circuitry 17 and the tracker circuitry 18 may thus function as described in relation to Figures 3A and 3B (although other arrangements would of course be possible as contemplated above). However, as shown in Figures 5A and 5B, additional filtering circuitry 19 is provided between the back EMF observer circuitry 17 and the tracker circuitry 18.

The filtering circuitry 19 is thus configured to take, as an input signal thereto, the output signals, e.g. $e_\alpha$ and $e_\beta$, from the back EMF observer circuitry 17. These signals are then appropriately filtered to reduce or remove undesirable harmonic components that were present in the output signal from the back EMF observer circuitry 17, and the filtered signals are then provided as input to the tracker circuitry 18 and processed accordingly to extract the rotor position and speed, e.g. using the Equations presented above.

A benefit of this is that by applying the filtering at this stage, the filtering circuitry 19 can be relatively lightweight, and simple to implement. For instance, the filtering circuitry 19 may comprise one or more band stop filters, configured to attenuate specific harmonic content from the output signals, $e_\alpha$ and $e_\beta$, from the back EMF observer circuitry 17. The one or more band stop filters may be configured to attenuate a majority, such as substantially all, of the specific harmonic content from the input signal thereto.

This then allows selective filtering of unwanted harmonics. For instance, as mentioned above, the present Applicants have recognised that the 5th and 7th harmonics are particularly prevalent in the otherwise sinusoidal back EMF signal for real-life motors. Accordingly, in some embodiments, as shown in Figure 5A, the harmonic reduction circuitry 19 comprises a 5th harmonic band stop filter and a 7th harmonic band stop filter for each of the output signals from the back EMF observer circuitry 17, e.g. for each of the output back EMF voltage components $e_\alpha$ and $e_\beta$. Again, this facilitates simpler filtering circuitry, since can focus filtering on harmonics with greatest effect, e.g. depending on the motor in question. However, in general, the filtering circuitry can be configured to filter any desired harmonics. For example, a given motor may be pre-characterised to determine which harmonics are most significant, and appropriate filtering then provided accordingly. Equivalently, the filtering circuitry 19 may comprise one or more band pass filters configured to pass only the components of interest. Various other arrangements would be possible.

The harmonic reduction circuitry 19 outputs filtered or modified back EMF voltage components $e'_\alpha$ and $e'_\beta$. The tracker circuitry 18 then takes, as an input signal thereto, the output signal from the harmonic reduction circuitry 19, and may be configured to extract the rotor speed $\omega$ and rotor angle $\theta$, e.g. from Equation 2 above. It has been found that cleaning the estimated back EMF harmonics early using harmonic reduction circuitry 19 (that is, upstream of the tracker circuitry 18) may help improve the sensorless angle estimation, may help reduce the torque and speed ripple, and may help improve overall performance of the motor.

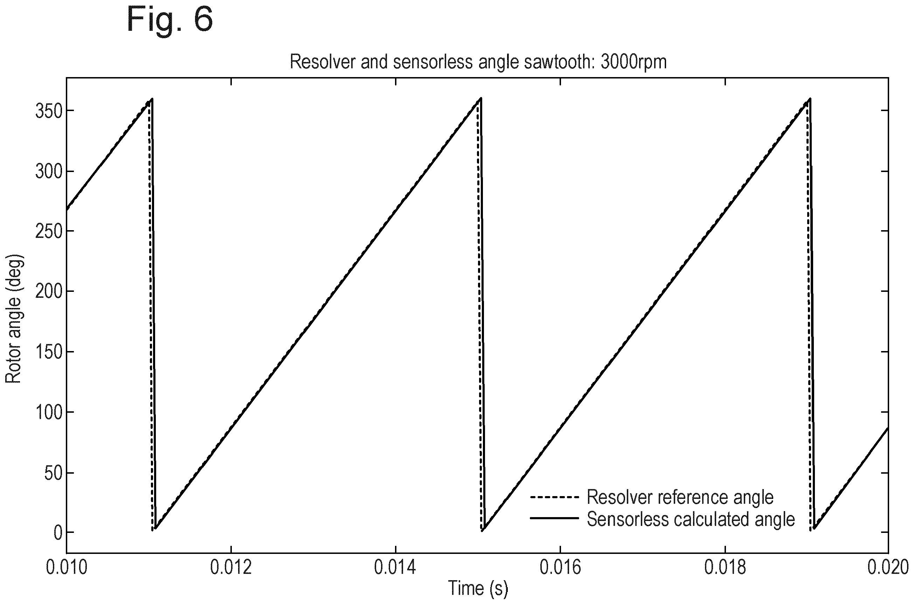

For example, Figure 6 shows the rotor angle for a positional saw tooth mode of operation when measured using the sensorless calculated angle of an embodiment of the present invention compared with a reference angle measured using an additional resolver. In this example, using targeted compensation to attenuate 5th and 7th harmonics in the manner described above, the 5th and 7th harmonic components remaining in the output of the tracker circuitry 18 are reduced to a 1° peak-to-peak perturbation at six times the rotor frequency.

By implementing the targeted compensation of the present invention upstream of the tracker circuitry 18, any additional filtering downstream of the tracker circuitry 18 to further improve performance may not need to be as complex or as low corner frequency, and thus the overall response of the controller may be improved in responding to motor disturbances or demand changes.

In embodiments, the filtering circuitry 19 may have a variable filtering characteristic. In that case, the filtering characteristic may be dynamically adapted, e.g. based on feedback of the current (or recent) rotor angle and speed in order to determine the frequency ranges that should be passed/filtered. This can be done in various suitable ways as desired. Alternatively, the filtering characteristic may be pre-set, e.g. based on knowledge of the motor's operation.

Various other arrangements would of course be possible. For instance, whilst embodiments are described above and illustrated in relation to signal processing circuitry it will be appreciated that such circuitry may generally comprise any suitable processing architecture and may for example be implemented in various ways including in dedicated (fixed-function) hardware circuitry, using programmable hardware elements, embedded software, or software running on a generic computing device. In this respect, it will be appreciated that the benefits of filtering the back EMF signal to reduce harmonics prior to computing the rotor angle apply independently of the specific implementation of the back EMF observer in hardware/software.

Thus, although the present embodiments has been described with reference to preferred embodiments, it will be understood by those skilled in the art that various changes in form and detail may be made without departing from the scope of the embodiments as set forth in the accompanying claims.

**Claims**

1. A controller for an electric motor system comprising a motor that comprises a rotor having a magnet mounted thereto and a stator that comprises one or more motor phase windings for driving rotation of the rotor when the motor phase windings receive an input voltage from an electrical power supply, wherein the controller executes a back "EMF" observer that is operable to estimate a rotor angle by observing a back electromotive force induced in the stator by the rotor, the controller comprising:

   a first processing stage that is configured to obtain as input a first set of one or more measured values indicative of a current and/or voltage measured for the respective motor phase windings of the stator and a corresponding second set of one or more supplied values indicative of the input voltage supplied to the motor phase windings from the electrical power supply, and to use the measured and supplied values obtained as input to generate one or more back EMF signals indicative of the back EMF induced in the respective motor phase windings by the rotor;
   a filtering stage for filtering the one or more back EMF signals generated by the first processing stage, wherein the one or more back EMF signals vary as a periodic function of the rotor angle, the periodic function including a fundamental component representing the variation at a fundamental frequency associated with the rotor angle and a corresponding set of harmonic components representing the variation at respective harmonics of the fundamental frequency associated with the rotor angle, and wherein the filtering stage is configured to reduce one or more harmonic components from the back EMF signals; and
   a second processing stage configured to receive the filtered back EMF signals from the filtering stage and to determine, using a known relationship between the back EMF and the rotor angle, information indicative of a rotor angle.

2. The controller of claim 1, wherein the filtering stage comprises a band pass or band stop filter that is configured to pass components of the first signal within a certain range of frequencies including the fundamental frequency associated with the rotor angle but to reject frequencies in one or more frequency ranges associated with one or more harmonics of the fundamental frequency associated with the rotor angle.

3. The controller of claim 1 or 2, wherein the filtering stage has a variable filtering characteristic.

4. The controller of claim 3, wherein the filtering characteristic of the filtering stage is adjusted in use based on feedback of the rotor angle and/or rotor speed.

5. The controller of claim 1 or 2, wherein the filtering characteristics of the filtering stage are pre-set based on a prior characterisation of the motor.

6. The controller of any preceding claim, wherein the motor is a three-phase motor, and wherein a transformation is applied to convert the measured currents and applied inputs for the three motor phases into a stationary two-phase representation such that a corresponding two signals indicative of the back EMF are generated by the first processing circuit, and wherein, after the two signals have been filtered to reduce harmonics, the second processing circuit processes the two filtered signals together to convert the two filtered signals into information indicative of the rotor angle.

7. A method of operating an electric motor system that comprises a motor that comprises a rotor having a magnet mounted thereto and a stator that comprises one or more motor phase windings for driving rotation of the rotor when the motor phase windings receive an input voltage from an electrical power supply, the motor further comprising a controller that executes a back "EMF" observer that is operable to estimate a rotor angle by observing a back electromotive force induced in the stator by the rotor,
   the method comprising, the controller:

   obtaining as input a first set of one or more measured values indicative of a current and/or voltage measured for the respective motor phase windings of the stator and a corresponding second set of one or more supplied values indicative of the input voltage supplied to the motor phase windings from the electrical power supply; using the measured and supplied values obtained as input to generate one or more back EMF signals indicative of the back EMF induced in the respective motor phase windings by the rotor, wherein the one or more back EMF signals vary as a periodic function of the rotor angle, the periodic function including a fundamental component representing the variation at a fundamental frequency associated with the rotor angle and a corresponding set of harmonic components representing the variation at respective harmonics of the fundamental frequency associated with the rotor angle;

filtering the one or more back EMF signals to reduce one or more harmonic components from the back EMF signals; and

determining from the filtered back EMF signals, using a known relationship between the back EMF and the rotor angle, information indicative of the rotor angle.

8. The method of claim 7, wherein the step of filtering the back EMF signal generated by the first processing stage uses a band pass or band stop filter that is configured to pass components of the first signal within a certain range of frequencies including the fundamental frequency associated with the rotor angle but to reject frequencies in one or more frequency ranges associated with one or more harmonics of the fundamental frequency associated with the rotor angle.

9. The method of claim 7 or 8, wherein the step of filtering the back EMF signal generated by the first processing stage uses a filter having a variable filtering characteristic.

10. The method of claim 9, comprising adjusting the filtering characteristic of the filter based on feedback of the rotor angle and/or rotor speed.

11. The method of claim 7 or 8, wherein the step of filtering the back EMF signal generated by the first processing stage uses a filter whose filtering characteristics are pre-set based on a prior characterisation of the motor.

12. The method of any of claims 7 to 11, wherein the motor is a three-phase motor, and wherein the method comprises applying a transformation to convert the measured currents and applied inputs for the three motor phases into a stationary two-phase representation such that a corresponding two signals indicative of the back EMF are generated, and wherein, after the two signals have been filtered to reduce harmonics, the method processing the two filtered signals together to convert the two filtered signals into information indicative of the rotor angle.

13. The controller of any of claims 1 to 6 or the method of any of claims 7 to 12 wherein the processing stages are implemented as fixed function hardware circuits.

14. The controller of any of claims 1 to 6 or the method of any of claims 7 to 12 wherein the processing stages are implemented as embedded software.

15. A computer program product comprising instructions that when executed by a processor will cause the processor to perform a method as claimed in any of claims 7 to 12.

# Fig. 1

# Fig. 2

# Fig. 3A

(Prior Art)

# Fig. 3B

(Prior Art)

EP 4 300 807 A1

# Fig. 4A

Per Unit Back EMF phase voltage of an in-service PMAC machine

# Fig. 4B

Per Unit Back EMF phase voltage of a continuous operated PMAC machine

# Fig. 5A

Fig. 5B

## Fig. 6

Resolver and sensorless angle sawtooth: 3000rpm

- - - - Resolver reference angle
——— Sensorless calculated angle

**EUROPEAN SEARCH REPORT**

Application Number

EP 22 38 6043

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU XUAN ET AL: "Enhanced Position Sensorless Control Using Bilinear Recursive Least Squares Adaptive Filter for Interior Permanent Magnet Synchronous Motor", IEEE TRANSACTIONS ON POWER ELECTRONICS, INSTITUTE OF ELECTRICAL AND ELECTRONICS ENGINEERS, USA, vol. 35, no. 1, 1 January 2020 (2020-01-01), pages 681-698, XP011751949, ISSN: 0885-8993, DOI: 10.1109/TPEL.2019.2912868 [retrieved on 2019-10-21] * the whole document * | 1-15 | INV. H02P6/182 |
| X | XIAO DIANXUN ET AL: "Computation-Efficient Position Estimation Algorithm for Permanent Magnet Synchronous Motor Drives Under Distorted Conditions", IEEE JOURNAL OF EMERGING AND SELECTED TOPICS IN POWER ELECTRONICS, IEEE, PISCATAWAY, NJ, USA, vol. 9, no. 3, 4 May 2020 (2020-05-04), pages 2759-2773, XP011857665, ISSN: 2168-6777, DOI: 10.1109/JESTPE.2020.2992243 [retrieved on 2021-06-01] * the whole document * | 1-15 | TECHNICAL FIELDS SEARCHED (IPC) H02P |
| X | CN 103 199 788 B (HARBIN INST OF TECHNOLOGY) 15 April 2015 (2015-04-15) * the whole document * | 1-15 | |
| A | CN 110 048 655 B (UNIV JIANGSU) 18 December 2020 (2020-12-18) * the whole document * | 1-15 | |

-/--

The present search report has been drawn up for all claims

| Place of search | Date of completion of the search | Examiner |
|---|---|---|
| Munich | 16 November 2022 | Fraïssé, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

**EP 22 38 6043**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TRAN NGOC HOANG ET AL: "Improving the accuracy of permanent magnet rotor position estimation for stepper motors using magnetic induction and harmonic rejection", IET POWER ELECTRONICS, IET, UK, vol. 13, no. 11, 19 August 2020 (2020-08-19), pages 2236-2244, XP006091752, ISSN: 1755-4535, DOI: 10.1049/IET-PEL.2019.1128 * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 16 November 2022 | Fraïssé, Stéphane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 22 38 6043**

This annex lists the patent family members relating to the patent documents cited in  the above-mentioned European search report.
The members are as contained in the European Patent Office EDP file on
The European Patent Office is in no way liable for these particulars which are merely given for the purpose of information.

**16-11-2022**

| Patent document cited in search report | | Publication date | Patent family member(s) | Publication date |
|---|---|---|---|---|
| CN 103199788 | B | 15-04-2015 | NONE | |
| CN 110048655 | B | 18-12-2020 | NONE | |

For more details about this annex : see Official Journal of the European Patent Office, No. 12/82

EPO FORM P0459